# EUROPÄISCHE PATENTANMELDUNG

(11) **EP 0 655 273 A2**
(43) Veröffentlichungstag der Anmeldung: **31.05.1995**
(21) Anmeldenummer: 95101853.0
(22) Anmeldetag: 18.05.1988
(51) Int. Cl.: B01D 53/34, B01J 20/04

(54) **Verfahren zur Reinigung von Gasen und Abgasen**

(30) Priorität: 18.05.1987 DE 3716566; 10.05.1988 DE 3815982; 16.05.1988 DE 3816595
(62) Teilanmeldung aus: 88904222.2
(71) Anmelder: FTU GMBH, D-82319 Starnberg (DE)
(72) Erfinder: Suchenwirth, Hermann Dr., D-82216 Malching (DE)
(74) Vertreter: Huber, Bernhard, Dipl.-Chem.

(57) **Zusammenfassung**

Die Erfindung betrifft ein Verfahren zur Reinigung von Gasen und Abgasen von sauer wirkenden Gasen, wie Chlorwasserstoff, Fluorwasserstoff, Schwefeldioxid und Blausäure, Stickstoffoxiden, Kohlenwasserstoffen, chlorierten Kohlenwasserstoffen, organischen Verbindungen und flüchtigen Schwermetallen, wie Quecksilber, Arsen, Antimon, Cadmium und Thallium. Dem Gas- bzw. Abgasstrom wird dabei Calciumhydroxid zugemischt, dem nach dem Löschen von Branntkalk Aktivkohle, Braunkohlenherdofenkoks, aktiviertes Aluminiumoxid und/oder Kieselgel zugesetzt wurde. Die Reinigung wird in einem Temperaturbereich von 20 bis 1200 Grad durchgeführt und die Abscheidung der Feststoffe erfolgt an Staubabscheidevorrichtungen.

## Beschreibung

Die Erfindung betrifft Verfahren zur Reinigung von Gasen und Abgasen.

Auf dem Gebiet der Abgasreinigung kommen zahlreiche Verfahren zur Anwendung. Neben der nassen Abgasreinigung kommt auch die trockene Abgasreinigung zum Einsatz. Sie besteht darin, in den zu reinigenden Abgasstrom pulverförmiges Calciumhydroxid einzublasen. Ziel ist, die im Abgasstrom vorhandenen sauren Schadstoffe, wie Schwefeldioxid,Chlorwasserstoff und Fluorwasserstoff zu neutralisieren und die gebildeten Neutralsalze an geeigneten Abscheidevorrichtungen, zum Beispiel Elektrofiltern und Gewebefiltern abzuscheiden.

Die trockene Abgasreinigung wird in verschiedenen Varianten angewandt. Die wesentlichsten Einsatzgebiete sind die Reinigung der Abgase von Kohle- und Braunkohlekraftwerken, Müllverbrennungsanlagen, Sondermüllverbrennungsanlagen und Feuerungsanlagen mit unterschiedlichstem Einsatzmaterial.

Mit Hilfe der trockenen Abgasreinigung lassen sich die schadstoffhaltigen Abgase weitestgehend reinigen. Von Nachteil ist jedoch, daß der Verbrauch an Calciumhydroxid sehr hoch ist. Im allgemeinen beträgt der stöchiometrische Faktor 3,5 - 6. So werden z.B. bei Abfallverbrennungsanlagen anstelle der erforderlichen 10-12 kg Hydroxid durchwegs mehr als 30 kg Calciumhydroxid benötigt. Der mäßige Wirkungsgrad der trockenen Abgasreinigung ist darauf zurückzuführen, daß die einzelnen Calciumhydroxidteilchen nicht vollständig durchreagieren. Auf dem Calciumhydroxid bildet sich eine Schicht aus Reaktionsprodukten, die das weitere Eindringen der abzuscheidenden sauren Schadstoffe verhindert.

Es ist immer wieder versucht worden, den hohen Calciumhydroxidverbrauch zu senken. Ein Verfahren besteht darin, nach der Abgasreinigung das abgeschiedene Produkt, das aus nicht umgesetztem Calciumhydroxid und den gebildeten Reaktionsprodukten besteht, mechanisch durch Mahlen wiederaufzubereiten. Sinn und Zweck des Mahlens besteht darin, die äußeren nicht reaktionsfähigen Schichten abzutrennen. Ein weiteres Verfahren sieht eine Zwischenlagerung des Reaktionsproduktes vor und nach einer Lagerung von 1-2 Tagen ein erneuter Einsatz.

Alle diese Verfahren sind jedoch von einer ungenügenden Wirksamkeit hinsichtlich der Steigerung der Reaktionsfähigkeit von Calciumhydroxid gekennzeichnet.
Unter Steigerung der Reaktionsfähigkeit des Ca(OH)₂ wird die Verringerung der Ca(OH)₂-Menge zur Erreichung eines bestimmten Abscheidegrades der sauren Schadstoffe verstanden. Ein niedriger stöchiometrischer Faktor Ca(OH)₂/saure Schadstoffe bedeutet eine höhere Reaktionsfähigkeit.

Es besteht deshalb ein erhebliches Interesse, Calciumhydroxidverbindungen herzustellen, die eine erhöhte Reaktionsfähigkeit gegenüber den sauren Schadstoffen der Abgase aufweisen. Weiterhin besteht ein Interesse daran, neben den sauren Schadstoffen des Abgases noch weitere Stoffe aus dem Abgas abzuscheiden. Dies sind insbesondere die Stickstoffoxide und das flüchtige Schwermetall Quecksilber. Von Interesse hierbei ist, die Abscheibung dieser Stoffe nicht in separaten Stufen sondern einstufig zusammen mit den sauren Schadstoffen durchzuführen.

Weiterhin wäre es von Vorteil, zusammen mit der Abscheidung saurer Schadstoffe auch den Gehalt an CO und/oder Gesamt-C zu verringern.

Der wesentliche Erfindungsgedanke, wie er in Anspruch 1 niedergelegt ist, besteht darin, daß vor dem Löschen, während des Löschens, mit dem zum Löschen erforderlichen Wasser und/oder nach dem Löschen des Branntkalkes die Reaktionsfähigkeit des Calciumhydroxids steigernde Stoffe und/oder schadstoffbindende und/oder katalytisch wirkende Stoffe zugesetzt werden.

Eine besonders bevorzugte Ausführungsform des erfindungsgemäßen Verfahrens besteht nun darin, daß dem zum Löschen von Branntkalk erforderlichen Wasser die Reaktionsfähigkeit des Calciumhydroxids steigernde Stoffe und /oder schadstoffbindende Stoffe zugesetzt werden.

Mit Hilfe derartiger eingeschleuster Substanzen läßt sich dann die Reaktionsfähigkeit des Calciumhydroxids gezielt verändern.

Weiterhin kann Ca(OH)₂ als Träger für andere schadstoffbindende Stoffe benutzt werden.

Bei den zugesetzten Stoffen kann es sich dann um Verbindungen handeln, die selbst auf die Schadstoffe einwirken, oder um Substanzen, die den inneren Aufbau, die Struktur und die Oberfläche des Calciumhydroxids verändern.

Eine vorteilhafte Ausführung des erfindungsgemäßen Verfahrens besteht nun darin, daß Stoffe zugesetzt werden, die die Bindung saurer Schadstoffe, wie HCl, HF, SO₂, SO₃, NO₂, HCN, Phenole, Carbonsäuren und dergl. begünstigen.

Unter diesen Stoffen werden vornehmlich Stoffe verstanden, die stark basisch wirken und deshalb bevorzugt mit den sauren Schadstoffen reagieren.

Demnach besteht eine vorteilhafte Ausführung des erfindungsgemäßen Verfahrens darin, als Stoffe zur Steigerung der Reaktionsfähigkeit Alkalihydrogencarbonate, Alkalihydroxide und/oder Alkalicarbonate zuzusetzen. Hierzu sind besonders geeignet: Natriumhydroxid, Natriumhydrogencarbonat und/oder Natriumcarbonat.

Diese Stoffe werden dem Löschwasser zugesetzt und dringen während des Ablöschprozeßes in das sich bildende Calciumhydroxidteilchen ein. Hierbei kann es auch zu weiteren Umsetzungen mit Calciumhydroxid kommen. Z. B. dürfte sich Natriumhydrogencarbonat aber auch Natriumcarbonat mit Calciumhydroxid anteilig zu Calciumcarbonat unter Freisetzung von Natriumhydroxid umsetzen. Es liegt also bei Anwendung derartiger Stoffe ein komplexes Gemisch der verschiedensten basischen Stoffe vor.

Eine weitere Ausführung des erfindungsgemäßen Verfahrens besteht darin, als reaktionssteigernde Stoffe hydratbildende Verbindungen zuzusetzen. Unter Hydraten werden dabei anorganische Salze verstanden, an denen Wasser in form eines Anlagerungskomplexes angelagert ist. Bevorzugt werden hierbei hydratbildende Verbindungen eingesetzt, die bei erhöhter Temperatur einen Teil oder die Gesamtmenge des Hydratwassers abgeben. Die Entwässerung kann hierbei im Abgasstrom erfolgen.

Eine vorteilhafte Ausführungsform des erfindungsgemäßen Verfahrens besteht nun darin, daß das hydrathaltige Calciumhydroxid vor dem Einsatz zur Abgasreingiung einer thermischen Behandlung zur ganzen oder teilweisen Abgabe des Hydratwasers unterworfen wird. Damit können die Eigenschaften des Ca(OH)₂, z.B. Oberfläche, gezielt verändert werden.

Die Anwesenheit von hydrathaltigen Verbindungen im Calciumhydroxidmolekül führt zu einer deutlichen Steigerung der Reaktionsfähigkeit des Calciumhydroxids.

Als hydratbildende Verbindung werden vorzugsweise Calciumchlorid und Magnesiumchlorid zugesetzt.
Calciumchlorid ist dafür bekannt, daß es Wasser zu verschiedenen Hydratationsstufen anlagert. Ein bekanntes Hydrat ist das Hexahydrat des Calciumchlorids. Dieses kann durch Erhitzen auf über 260 Grad C in Stufen zu wasserfreiem Chlorid entwässert werden. Wasserfreies Calciumchlorid seinerseits hat wieder das Bestreben, Wasser aufzunehmen, so daß auch während der Umsetzung bei der Abgasreinigung in das Innere des Calciumhydroxids kaum Wasser aufgenommen wird und damit die Reaktionsfähigkeit eine erhebliche Steigerung erfährt, z.B. gegenüber SO₂.
Werden hydratbildende Stoffe dem Löschwasser zugesetzt, so ist es zweckmäßig, das zur Hydratbildung erforderliche Wasser dem Löschwasser zuzugeben.

Eine weitere Ausführungsform des erfindungsgemäßen Verfahrens besteht darin, Verbindungen zuzusetzen, die während des Löschprozeßes Hydroxide bilden, die ihrerseits im Temperaturbereich von 50-450 Grad C entwässerbar sind.

Nahezu alle Metallsalze, die dem Löschwasser zugesetzt werden, bilden beim Löschprozeß Hydroxide. Nicht alle Hydroxide sind jedoch im Temperaturbereich von 50-450 Grad C entwässerbar. Entwässerbare Hydroxide bilden z.B. die Schwermetallhydroxide.

Bei der Durchführung des erfindungsgemäßen Verfahrens kann nun so vorgegangen werden, daß das hydroxidhaltige Calciumhydroxid direkt eingesetzt wird. Andererseits kann es jedoch auch zweckmäßig sein, das hydroxidhaltige Calciumhydroxid vor dem Einsatz zur Abgasreingiung einer thermischen Behandlung zur ganzen oder teilweisen Entwässerung zu unterwerfen.

Durch die ganze oder teilweise Entwässerung kann die aktive Oberfläche des Calciumhydroxidkorns deutlich erhöht und damit die Reaktionsfähigkeit gesteigert werden.

Vorzugsweise werden Hydroxide eingesetzt, deren Entwässerung bei Temperaturen bis maximal 450 Grad C erfolgt. Ab 450 Grad C setzt die Entwässerung des Calciumhydroxids ein.

Erfindungsgemäß werden als hydroxidbildende Verbindungen - wasserlösliche Eisen(II)- und/oder Eisen(III)-Salze, vorzugsweise als Chloride, eingesetzt. Eisen(II)- und Eisen (III)-Salze bilden im alkalischen Bereich Eisenhydroxide. Diese Eisenhydroxide können ihrerseits stufenweise entwässert werden. Diese Entwässerung kann dabei während der Abgasreinigung im Abgasstrom erfolgen. Es ist jedoch auch möglich, diese Abspaltung von Wasser ganz oder teilweise vor dem Einsatz zur Abgasreinigung durchzuführen. Auf diese Art und Weise können ganz gezielt wasserhaltige und wasserabgebende Calciumhydroxide, die trotzdem als trockenes Pulver vorliegen, hergestellt werden.

Die eisenhaltigen Calciumhydroxide lassen sich bevorzugt zur Abscheidung von Stickstoffoxiden verwenden, auch zur simultanen Abscheidung mit sauren Schadstoffen.

Sowohl bei den hydroxidhaltigen, als auch bei den hydrathaltigen Calciumhydroxidpulvern handelt es sich um nichtklebende, leicht transportfähige und leicht in den Gasstrom einzubringende Pulver.

Ein weiteres Problem der Abgasreinigung besteht darin, daß neben den sauren Schadstoffen auch noch Schwermetalle, insbesondere Quecksilber,im Abgasstrom vorliegen. Zur Abscheidung von Quecksilber werden unterschiedliche Methoden angewandt. Bei der trockenen Abgasreinigung selbst ist es bisher nicht möglich gewesen, die Abscheidung von Quecksilber so weit zu steigern, daß die vorgeschriebenen Grenzwerte sicher eingehalten werden können. Das übliche Verfahren, den Quecksilbergehalt des Abgases zu vermindern, besteht darin, die Temperatur des Abgases durch Zugabe von Wasser so weit abzusenken, daß eine Bindung von Quecksilber an Calciumhydroxid erfolgt.

Dieses Verfahren hat jedoch den Nachteil, daß nach wie vor deutliche Mengen an Quecksilber im Abgas bleiben und dabei unkontrollierten Wasserzugaben Störungen in den nachgeschalteten Abscheidevorrichtungen auftreten können.

Erfindungsgemäß werden nun dem zum Löschen des Branntkalkes erforderlichen Löschwasser quecksilberbindende Stoffe, vorzugsweise Schwefelwasserstoff, Natriumhydrogensulfid und/oder Trimercapto-s-triazin(TMT) und dergl. zugesetzt. TMT wird bevorzugt als Natriumsalz eingesetzt.

Durch die Kombination von Calciumhydroxid mit den quecksilberbindenden Stoffen wird erreicht, daß die durch einen charakteristischen Geruch ausgezeichneten Stoffe Schwefelwasserstoff und Natriumhydrogensulfid inform geruchloser Calciumsulfide eingesetzt werden können und die Neutralisation der sauren Schadstoffe gemeinsam mit der Bindung von Quecksilber durchgeführt werden kann. Auf diese Art und Weise können zusätzliche Abgasreinigungsstufen vermieden werden.

Durch die Anwesenheit von Eisenverbindungen im Calciumhydroxid werden die Stickoxide zu höheren Stickoxiden oxidiert und können dann mit Calciumhydroxid gebunden werden. Durch die Anwendung des erfindungsgemäßen Verfahrens können demnach zahlreiche Schadstoffe aus dem Abgasstrom entfernt werden. Eine vorteilhafte Ausführungsform des erfindungsgemäßen Verfahrens besteht nun darin, daß dem Löschwasser nicht nur eine Stoffgruppe sondern ganze Kombinationen für verschiedene abzuscheidende Schadstoffe zugesetzt werden. Eine erfindungsgemäße mit großem Vorteil einzusetzende Kombination besteht aus Natriumhydrogencarbonat, Eisen(III)-chlorid und Trimercapto-s-triazin(TMT). Mit einer derartigen Kombination können nicht nur saure Schadstoffe sondern auch Stickstoffoxide und leicht flüchtige Schwermetalle insbesondere Quecksilber abgeschieden werden.

Eine Ausführungsform des erfindungsgemäßen Verfahrens besteht also darin, sowohl säurebindende als auch stickstoffbindende wie auch schwermetallbindende Stoffe gemeinsam dem Löschwasser zuzusetzen und ein derartig modifiziertes Calciumhydroxid herzustellen.

Nach dem erfindungsgemäßen Verfahren können also Calciumhydroxide hergestellt werden, die oxidierende, reduzierende, neutralisierende und/oder schwermetallhaltige Stoffe enthalten. So ist es beispielsweise möglich, dem Löschwasser Zinn- und Zinkchlorid zuzusetzen, das dann in das Calciumhydroxid eingebunden wird. Die Metallsalze können z.B. mit Wasserstoff zu Zink bzw. Zinn reduziert werden. Dieses über das Calciumhydroxid fein verteilte Metall dient dann bevorzugt zur Aufnahme von Quecksilber aus dem Abgasstrom.

Als oxidierende oder reduzierende Stoffe sind mit Vorteil Schwermetalle einzusetzen. Es handelt sich dabei um die Schwermetalle, die in verschiedenen Oxidationsstufen vorkommen,z.B.Vanadin, Molybdän, Wolfram, Mangan, Titan, Kupfer, Chrom und Vanadin.

Diese Schwermetalle werden dem Löschwasser in Form wasserlöslicher Salze zugesetzt und können nach der Aufnahme in das Calciumhydroxid noch einer Reduktion oder Oxidation unterworfen werden.

Die schwermetallhaltigen Calciumhydroxide können neben der üblichen "Entsäuerung" des Abgases auch zur weitergehenden Abgasreingiung verwendet werden. Z.B. kann Kohlenmonoxid zu Kohlendioxid oxidiert werden. Oxidiert werden können auch die im Abgas vorhandenen Kohlenwasserstoffe, so daß es zur Absenkung des Gesamt-C-Gehaltes kommt.

Als oberflächenaktive Substanzen kommen die erwähnten Substanzen Aktivkohle, Braunkohlen-Herdofenkoks, aktiviertes Aluminiumoxid /oder Kieselgel in feiner Verteilung zur Anwendung. Die Wirkung dieser oberflächenaktiven Substanzen bezieht sich darauf, aus dem Abgasstrom Restgehalte an organischen Stoffen, an chlorierten Kohlenwasserstoffen, wie Dioxinen, Hexachlorbenzol, Pentachlorphenol udgl., an polykondensierten aromatischen Kohlenwasserstoffen, wie Benzo(a)pyren, Dibenz(a,h)anthracen udgl. abzuscheiden. Diese Stoffe kommen in Gasen und Abgasströmen im allgemeinen in äußerst geringer Konzentration vor. Deren Abscheidung an herkömmlichen Abscheidevorrichtungen, sei es nun in Wäschern oder an elektrostatischen Abscheidern oder an Gewebefiltern,macht Schwierigkeiten. Bei Einsatz von Calciumhydroxid, das noch oberflächenaktive Substanzen enthält, lassen sich diese Spurenstoffe an die oberflächenaktiven Substanzen binden und damit aus dem Abgasstrom entfernen.

Ein weiteres Problem der Abscheidung von umwelttoxischen Stoffen sind die Schwermetalle. Hierbei sind es insbesondere Quecksilber, Arsen, Antimon und Thallium, die schon im Temperaturbereich von 20-200 Grad C sehr flüchtig sind. Deren Abscheidung erfolgt aus Abgasen nach dem Stand der Technik derart, daß der Abgasstrom möglichst weit abgekühlt wird, so daß es zur Kondensation des Wassers kommt. Dieses Abkühlen erfordert nicht nur eigene Vorrichtungen sondern auch Energie.
Durch die oberflächenaktiven Substanzen lassen sich die leicht flüchtigen Schwermetalle auch bei Temperaturen von 100-200 Grad C binden und abscheiden.
Eine bevorzugte Ausführungsform des erfindungsgemäßen Verfahrens besteht darin, als oberflächenaktive Substanzen Aktivkohle, Braunkohlen-herdofenkoks, aktiviertes Aluminiumoxid und/oder Kieselgel in fein verteilter Art dem Löschwasser von Branntkalk zuzusetzen.

Diese oberflächenaktive Stoffe sind zur Durchführung des erfindungsgemäßen Verfahrens besonders geeignet. Die Aktivkohle eignet sich besonders zur Bindung von organischen Substanzen und auch von Quecksilber. Kieselgel und Aluminiumoxid sind für polare Substanzen, wie oxidierte organische Verbindungen, und anorganische Schadstoffe, wie Chlorwasserstoff und Schwefeldioxid besonders geeignet.

Weiterhin kann das erfidnungsgemäße Verfahren derart durchgeführt werden, daß die oberflächenaktiven Substanzen bevor sie in den Löschprozeß für Branntkalk eingebracht werden, mit katalytisch wirkenden oder schadstoffbindenden Substanzen beaufschlagt werden. Dies kann derart durchgeführt werden, daß die katalytisch wirkenden oder schadstoffbindenden Substanzen im Löschwasser vorliegen und die oberflächenaktiven Substanzen zum Löschwasser gegeben werden. Durch längeres Stehen, evtl. über Stunden, adsorbieren die oberflächenaktiven Substanzen die Inhaltstoffe des Löschwassers. Nach dem Durchführen des Löschprozeßes liegen Calciumhydroxid und oberflächenaktive Substanzen in feinster Verteilung und bestens gemischt vor.

Mit Vorteil läßt sich dieser Erfindungsgedanke verwirklichen, wenn den oberflächenaktiven Substanzen vor dem Löschen quecksilberbindende Stoffe, z.B. Natriumsulfid, Mercaptane oder Trimercapto-s-triazin und/oder Vanadin-, Wolfram-, Molybdän-, Mangan-, Eisen-, Nickel-, Kobalt-, Chrom- und/oder Titanverbindungen beaufschlagt werden. Für die Abgasreinigung liegen die katalytisch wirkenden oder quecksilberbindenden Substanzen dann in großer Oberfläche vor und vermögen ihre Wirksamkeit besonders zu entfalten.

Eine weitere Ausführungsform des erfindungsgemäßen Verfahrens besteht darin, daß zur Herstellung reaktionsfähiger Calciumhydroxide für die Gas- und Abgasreingiung die oberflächenaktiven Substanzen, wie Aktivkohle, Braunkohlen-Herdofenkoks, Aluminiumoxid, Kiesulgel udgl. dem Branntkalk zugemischt und dann erst der Löschprozeß durchgeführt wird.

Das Mischen kann entweder in Mischapparaturen oder auch in Mühlen durchgeführt werden.

Ein weiterer Gegenstand der Erfindung ist noch ein Verfahren zur Reinigung von Gasen und Abgasen von sauer wirkenden Schadstoffen, wie Chlorwasserstoff, Fluorwasserstoff, Schwefeldioxid, Blausäure udgl., von Stickstoffoxiden, Kohlenwasserstoffen, chlorierten Kohlenwasserstoffen und flüchtigen Schwermetallen, z.B. Quecksilber, Arsen, Antimon, Cadmium und Thallium derart, daß dem Gas- bzw. Abgasstrom feinpulvriges Calciumhydroxid zugesetzt wird, das oberflächenaktive Substanzen, wie Aktivkohle, Braunkohlen-Herdofenkoks, Kieselgel und/oder aktives Aluminiumoxid enthält und daß das mit Schadstoffen beladene Hydroxid an Staubabscheidevorrichtungen wieder abgeschieden wird.

Der Reinigungsprozeß von Gasen kann hierbei in einem weiten Temperaturbereich von 200-1000 Grad C durchgeführt werden. Bei Temperaturen oberhalb 400 Grad C ist es angebracht, als oberflächenaktive Substanz aktiviertes Aluminiumoxid bzw. Kieselgel einzusetzen. Bei tieferen Temperaturen sind alle angeführten oberflächenaktiven Substanzen geeignet.

Es ist allerdings auch möglich und vorteilhaft, das zu reinigende Gas oder Abgas durch eine feste oder bewegte Schicht aus Ca(OH)₂ zu leiten, das wie oben dargelegt hergestellt worden ist.
Als feste Schicht kommt gekörntes Ca(OH)₂ in Frage. Allerdings ist es auch möglich, Ca(OH)₂ auf gekörntes Material aufzubringen und dann zur Reinigung einzusetzen.

Zur Menge der einzusetzenden Stoffe ist festzustellen, daß sich diese nach der Menge des abzuscheidenden Schadstoffes und der Löslichkeit des jeweiligen Stoffes im Wasser richtet. Die Obergrenze des jeweiligen zuzusetzenden Stoffes richtet sich nach dessen Löslichkeit im Wasser.

Mit dem nach dem erfindungsgemäßen Verfahren hergestellten Calciumhydroxid kann die Reaktionsfähigkeit des Ca(OH)₂ deutlich gesteigert werden, d.h. der Brauch an Ca(OH)₂ zur Abscheidung saurer Schadstoffe erheblich gesenkt werden. Gleichzeitig lassen sich noch flüchtige Schwermetalle, z.B. Quecksilber, Cadmium udgl. aus dem Abgasstrom abscheiden. Ein erheblicher Vorteil ist auch die simultane Abscheidung oder Konzentrationsminderung von sauren Schadstoffen und Stickstoffoxiden, die auch mit einer gleichzeitigen Schwermetallabscheidung verbunden werden kann.

Weiterhin lassen sich durch Zusätze zum Löschwasser physikalische Eigenschaften, wie Oberfläche, Fließverhalten, Verteilungsfähigkeit im Abgasstrom und dergl. verändern und gezielt beeinflussen.

Bei der Verwendung von Salzen mit Chlorid als Anion kommt es zu einer starken Beschleunigung des Löschvorganges. Dies kann u.U. dazu führen, daß die gleichmäßige Durchmischung des Branntkalkes mit Wasser und den darin gelösten Substanzen nicht gewährleistet werden kann. Bei der Verwendung der modifizierten Calciumhydroxide zur Gas- und Abgasreinigung besteht dann die Gefahr, daß die Abscheideleistung starken Schwankungen unterworfen ist.
Andererseits führt die Zugabe von Salzen mit Sulfat und Hydroxid als Anion zu einer Hemmung des Löschvorganges. Eine Hemmung des Löschvorganges hat den Nachteil, daß die vorhandenen Löschapparaturen in ihrer Effektivität verschlechtert werden, d.h. die in der Zeiteinheit hergestellte Menge Calciumhydroxid geht zurück. Hinzu kommt noch, daß bei starker Verzögerung des Löschvorganges die Löschtemperatur niedrig bleibt und damit ein Produkt entsteht, das für die Gas- und Abgasreinigung nicht aktiv genug ist.

In Weiterbildung des Gegenstandes der Erfindung wird deshalb erfindungsgemäß vorgeschlagen, daß bei Einsatz von Salzen oder Stoffen, die die Löschgeschwindigkeit steigern, noch Salze oder Stoffe zugesetzt werden, die die Löschgeschwindigkeit verlangsamen.

Es wurde gefunden, daß die hemmende Wirkung von Sulfaten z.B. durch die Zugabe von Chloriden wieder aufgehoben werden kann. Das Mischungsverhältnis hemmende zu beschleunigende Salze kann dabei in weiten Grenzen variiert und so eingestellt werden, daß eine Löschzeit nach Wunsch eintritt.

Eine weitere bevorzugte Ausführungsform des erfindungsgemäßen Verfahrens ist dadurch gekennzeichnet, daß bei Einsatz von Metallsalzen mit Chlorid, Nitrit und/oder Nitrat als den Löschvorgang beschleunigendes Anion Metallsalze mit Sulfat, Hydrogencarbonat, Phosphat und/oder Hydroxid als den Löschvorgang hemmendes Anion zugesetzt werden.

Zum Beispiel beschleunigt Calciumchlorid den Löschvorgang sehr stark. Der rasche Verlauf der Löschreaktion kann durch Kombination mit Eisensulfat gehemmt und die Löschzeit nach Wahl eingestellt werden. Die Auswahl der Salze mit Beschleunigungscharakter und der mit Hemmung muß so erfolgen, daß bei der Lösung im Löschwasser keine Fällungsreaktionen eintreten.
Als vorteilhaft hat es sich erwiesen, die Alkali-, Magnesium-, Calcium-, Aluminium- und Eisenchloride mit Eisen- und/oder Aluminiumsulfat als den Löschvorgang hemmende Salze einzusetzen.

Außerdem wurde gefunden, daß sich das erfindungsgemäße Verfahren mit Vorteil anwenden läßt, wenn die Löschgeschwindigkeit steigernde und die Löschgeschwindigkeit hemmende Salze im Gewichtsverhältnis 1:5 bis 5:1 eingesetzt werden.

Die erfindungsgemäß hergestellten modifizierten Ca(OH)₂-Verbindungen lassen sich nicht nur zur Schadstoffbindung sondern auch als Katalysatoren bei Oxidations- und Reduktionsvorgängen einsetzen.

### Beispiel 1

25 g CaO wurden mit 13,5 g Wasser gelöscht. Es fiel ein feines weißes Pulver an.
In einem Glasreaktor wurden durch 253 mg dieses Materials bei 170 Grad C 11,5 l eines Abgases folgender Zusammensetzung geleitet:

| | |
|---|---|
| - Sticksktoff | 80 Vol.-% |
| - Sauerstoff | 20 Vol.-% |
| - Feuchte | 262 mg/l |
| - HCl-Gehalt | 22,1 mg/l |

21,1 % des zugegebenen HCl wurden von Ca(OH)₂ absorbiert.

### Beispiel 2

28 g CaO wurden mit 16,56 Wasser gelöscht, dem 1,4 g CaC1₂ zugesetzt worden waren.
Es fiel ein feines Pulver an.
In einem Glasreaktor wurden durch 274 mg dieses Materials, das 253 mg reinem Ca(OH)₂ entsprach, bei 167 Grad C 12,75 l eines Abgases folgender Zusammensetzung geleitet:

| | |
|---|---|
| - Stickstoff | 80 Vol.-% |
| - Sauerstoff | 20 Vol.-% |
| - Feuchte | 235 mg/l |
| - HCl-Gehalt | 19,8 mg/l |

23,7 % des zugegebenen HCl wurden von Ca(OH)₂ absorbiert. Dies bedeutet eine um 12,3 % erhöhte HCl-Abscheidung gegenüber Beispiel 1.

### Beispiel 3

28 g CaO wurden mit 15,2 g Wasser gelöscht, dem 2,3 g FeCl₃ x6H₂O zugesetzt worden waren.
Es fiel ein feines Pulver von schwach rosa Färbung an. In einem Glasreaktor wurden durch 277 mg dieses Materials, das 253 mg Ca(OH)₂ entsprach, bei 166 Grad C 12 l eines Abgases folgender Zusammensetzung geleitet:

| | |
|---|---|
| - Stickstoff | 80 Vol.-% |
| - Sauerstoff | 20 Vol.-% |
| - Feuchte | 250 mg/l |
| - HCl-Gehalt | 21 mg/l |

28,1 % des zugegebenen HCl wurden von Ca(OH)₂ absorbiert. Dies bedeutet eine um 33% erhöhte HCl-Abscheideleistung gegenüber Beispiel 1 !

### Beispiel 4

28 g Branntkalk wurden mit 15,2 g Wasser, in dem 1,4 g Aktivkohle mit 700 m ²/g aktiver Oberfläche suspendiert worden waren, gelöscht. Es entstand ein graues Pulver, das gute Fließfähigkeit aufwies.
Über 252 mg dieser Substanz in fester Schicht wurde bei einer Temperatur von 149 Grad C ein Gas geleitet, das folgende Kennzeichen aufwies:

| | |
|---|---|
| - Feuchte | 0,26 g/l |
| - HCl-Gehalt | 22,5 mg/l |
| - HgC12-Gehalt | 1,29 µg/l |

Insgesamt wurden 11,2 l über das modifizierte Ca(OH)₂ geleitet.
Von insgesamt 14,4 µg HgCl₂ wurden 76,5 % an der Aktivkohle absorbiert.

### Beispiel 5

28 g Branntkalk, der etwa 1 Monat gelagert worden war, wurden mit 15,2 g Wasser versetzt. Nach 40 Sekunden Reaktion wurden 90 Grad C gemessen.
Wurden dem Löschwasser 1,4 g Eisen(III)-sulfatx7H₂O zugesetzt, dann wurden 90 Grad C erst nach 120 Sekunden erreicht. Andererseits führt die Zugabe von 2,3 g Eisen(III)-chloridx6H₂O zum Löschwasser nahezu zu einer Spontanreaktion. Bereits nach 5 Sekunden werden 90 Grad C erreicht. Werden nun dem Löschwasser 0,4 g Eisen(III)-chloridx6H₂O und 0,2 g Eisen(III)-sulfatx7H2O zugesetzt, dann beträgt die Zeit bis zur Erreichung von 90 Grad C rund 50 Sekunden.

Dieses Beispiel zeigt, daß die hemmende und beschleunigende Wirkung von Mutallsalzen im Löschwasser durch entsprechende Kombinationen gesteuert werden kann.

### Beispiel 6

28g frisch hergestellter Branntkalk werden mit 18g Wasser gelöscht.
Die Zeit bis zur Erreichung von 90 Grad C beträgt 13 Sekunden. Werden dem Löschwasser 0,4g Aluminiumsulfatx18H₂O zugesetzt, dann werden 18 Sekunden bis zur Erreichung von 90 Grad C benötigt. Die Löschzeit kann um mehr als 50% herabgesetzt werden, wenn der angegebenen Menge von Aluminiumsulfat noch 0,2g Eisen(III)-chloridx6H₂O zugegeben werden. Dann beträgt die erforderliche Zeit zur Erreichung von 90 Grad C nur noch 11 Sekunden.

## Patentansprüche

1. Verfahren zur Reinigung von Gasen und Abgasen von sauer wirkenden Gasen, wie Chlorwasserstoff, Fluorwasserstoff, Schwefeldioxid und Blausäure, Stickstoffoxiden, Kohlenwasserstoffen, chlorierten Kohlenwasserstoffen, organischen Verbindungen und flüchtigen Schwermetallen, wie Quecksilber, Arsen, Antimon, Cadmium und Thallium, wobei dem Gas- bzw. Abgasstrom Calciumhydroxid zugemischt wird, dem nach dem Löschen von Branntkalk Aktivkohle, Braunkohlenherdofenkoks, aktiviertes Aluminiumoxid und/oder Kieselgel zugesetzt werden, die Reinigung im Temperaturbereich von 20 bis 1200 Grad C durchgeführt wird und die Abscheidung der Feststoffe an Staubabscheidevorrichtungen erfolgt.

2. Verfahren zur Reinigung von Gasen und Abgasen von sauer wirkenden Gasen, wie Chlorwasserstoff, Fluorwasserstoff, Schwefeldioxid und Blausäure, Stickstoffoxiden, Kohlenwasserstoffen, chlorierten Kohlenwasserstoffen, organischen Verbindungen und flüchtigen Schwermetallen, wie Quecksilber, Arsen, Antimon, Cadmium und Thallium, wobei der Gas- bzw. Abgasstrom mit reaktionsfähigem Calciumhydroxid behandelt wird, welches erhältlich ist durch Löschen von Branntkalk, sowie Zugabe von Aktivkohle, Braunkohlenherdofenkoks, aktiviertem Aluminiumoxid und/oder Kieselgel zu dem gelöschten Branntkalk, die Reinigung im Temperaturbereich von 20 bis 1200 Grad C durchgeführt wird und die Abscheidung der Feststoffe an Staubabscheidevorrichtungen erfolgt.
